# DEMANDE DE BREVET EUROPEEN

(11) **EP 3 533 887 A1**
(43) Date de publication de la demande: **04.09.2019**
(21) Numéro de dépôt: 18159577.8
(22) Date de dépôt: 01.03.2018
(51) Int. Cl.: C22B 1/14, C22B 1/245, C22B 7/00, H01M 6/52, H01M 10/54, C21B 5/02, C22B 1/00, C22B 1/248, C21C 5/52

(54) **PROCÉDÉ ET INSTALLATION DE VALORISATION DE PILES ET ACCUMULATEURS USAGÉS**

(71) Demandeur: Fiday Gestion, 70360 Chassey-les-Scey (FR)
(72) Inventeur: GARNIER, Jean-Pierre, 73200 ALLONDAZ (FR)
(74) Mandataire: Berger, Helmut

(57) **Abrégé**

L'invention porte sur un procédé de valorisation de piles usagées telles que des piles salines, alcalines, des piles boutons et des accumulateurs usagés, par introduction des piles et/ou accumulateurs comme charge dans un four de fusion de métal, au gueulard de celui-ci. L'invention est caractérisée en ce que l'on soumet les piles et/ou accumulateurs à une opération de compression pour éliminer les électrolytes contenus dans les piles et/ou accumulateurs, préalablement à l'introduction des piles et/ou accumulateurs dans le four de fusion de métal.

L'invention est utilisable pour la valorisation de piles et accumulateurs usagés.

## Description

L'invention concerne un procédé et une installation de valorisation de piles usagées telles que des piles salines, alcalines, des piles boutons ou des accumulateurs usagés par introduction des piles et/ou accumulateurs comme charge dans un four de fusion de métal tel qu'un cubilot ou un four à arc, au gueulard de celui-ci.

Des procédés et installations de ce type sont déjà connus, mais présentent l'inconvénient que l'eau de l'électrolyte des piles/accumulateurs, d'une teneur de 9 à 18% doit être évaporée, ce qui est relativement coûteux en énergie, et plus gênant encore, que le potassium ou les alcalins ainsi que les chlorures présents dans l'électrolyte sont susceptibles de générer des corrosions accélérées au niveau des réfractaires du four et des échangeurs destinés au refroidissement des fumées.

L'invention a pour but de pallier cet inconvénient.

Pour atteindre ce but, le procédé selon l'invention est caractérisé en ce que l'on soumet les piles et/ou accumulateurs à une opération de compression pour éliminer les électrolytes contenus dans les piles et/ou accumulateurs, préalablement à l'introduction des piles et/ou accumulateurs dans le four de fusion de métal.

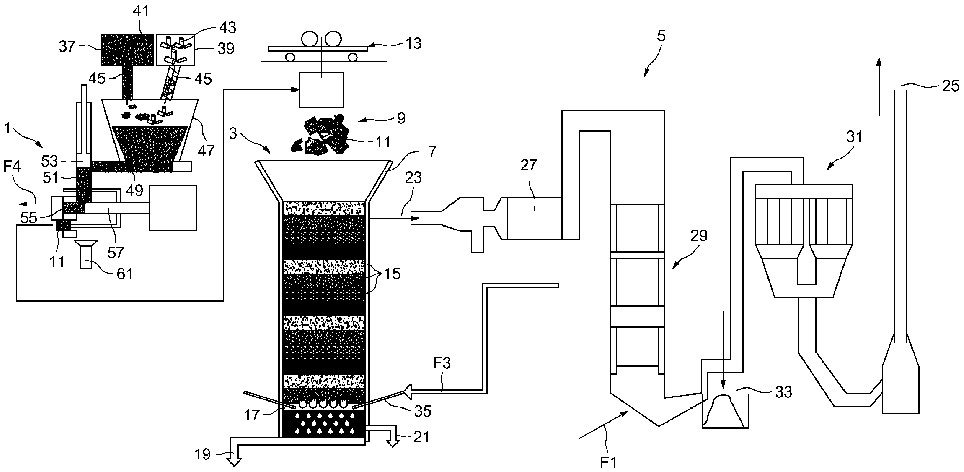

L'invention sera mieux comprise, et d'autres buts, caractéristiques, détails et avantages de celle-ci apparaîtront plus clairement dans la description explicative qui va suivre faite en référence au dessin annexé donné uniquement à titre d'exemple illustrant un mode de réalisation de l'invention, et dont la figure unique est une vue schématique d'une installation de valorisation de piles et accumulateurs selon l'invention.

La figure unique montre schématiquement, à titre d'exemple non exclusif, une installation pour mettre en oeuvre le procédé de valorisation de piles usagées, telles que de piles salines, alcalines, des piles boutons, et des accumulateurs usagés dont on souhaite valoriser les éléments chimiques dans la fonte ou de l'acier d'un four de fusion de métal tel que le cubilot représenté à la figure unique. Comme cela sera expliqué de façon détaillée ci-après, selon le procédé proposé par l'invention, avant d'introduire les piles et/ou accumulateurs dans le four, on élimine par compression des piles/accumulateurs l'électrolyte que ceux-ci contiennent, pour éviter que notamment l'hydroxyde de potassium et les chlorures sous forme ionique contenues dans les piles/accumulateurs puissent générer des effets de corrosion au niveau des réfractaires du four et des échangeurs destinés au refroidissement des fumées.

Dans l'exemple de l'invention représenté, l'opération d"élimination de l'électrolyte se fait dans une opération de briquetage sous pression des piles/accumulateurs, pour obtenir un sous-produit sous forme de briquettes composites exemptes d'électrolyte et appropriées pour la valorisation dans le four de fusion. Pour obtenir des briquettes suffisamment résistantes aux chocs mécaniques qui vont se produire au cours de leur chargement dans le four, les briquettes sont réalisées à partir d'un mélange homogène de tournures ou copeaux de fonte ou d'acier avec des piles et/ou accumulateurs. Des éléments additionnels tels qu'une poudre de Black Mass de piles ou d'accumulateurs, et éventuellement de carbone et d'éléments d'alliage intéressant pour la qualité finale de la fonte ou de l'acier produite peuvent être ajoutés à ce mélange. D'autres éléments additionnels peuvent être rajoutés au mélange avant le pressage de la briquette dans le but de rechercher la neutralité entre les éléments basiques et acides de manière à minimiser les risques de corrosion dans le four et ces annexes. Le mélange de ces différents composants des briquettes doit être le plus homogène possible avant le briquetage. Pour chasser les électrolytes liquides des piles et/ou accumulateurs introduites dans le mélange, une pression minimale de 2500kg/cm² doit être appliquée. Les électrolytes peuvent être recueillis pour une valorisation ultérieure.

Le pourcentage de piles et/ou accumulateurs ou produits pulvérulents ajoutés ne doit pas dépasser en totalité et en masse 40% du poids d'une briquette, pour assurer la résistance aux chocs des briquettes.

Sur la représentation schématique de l'installation selon l'invention, de la figure unique, le dispositif de briquetage est indiqué par la référence 1, le four de fusion formé dans l'exemple représenté par un cubilot, par la référence 3 et la référence 5 désigne un système d'épuration des gaz ou fumées de sortie du four 3.

Le cubilot 3 présente la structure générale classique, comprenant en haut un gueulard 7 pour l'introduction dans le four des charges indiquées en 9, notamment du coke, des aciers, de la fonte issue de recyclages, des briquettes de ferro-silicium ou carbure de silicium, des alliages divers en addition et un fondant type castine pour capter et éliminer en continue les oxydes non fusibles, et bien entendu, les briquettes désignées par la référence 11 qui comportent donc dans un mélange homogène avec des copeaux de fonte et d'acier et, le cas échéant, d'autres éléments additionnels, les piles et/ou accumulateurs exemptes de leur électrolyte. Ces charges sont amenées au gueulard par des moyens de transport indiqués par la référence 13. La référence 15 indique les couches de charge dans le cubilot. La zone de fusion avec le bain du métal au fond du liquide dans le fond du cubilot est désignée par la référence 17. Les références 19 et 21 représentent schématiquement respectivement les sorties de la fonte et du laitier liquide.

Le système 5 d'épuration des gaz ou fumées de sortie du four 3 comprend essentiellement, disposés en série entre la sortie 23 du cubilot et l'endroit de rejet dans l'atmosphère des gaz épurés 25, une chambre de combustion 27 pour bruler le monoxyde de carbone, des échangeurs de chaleur 29 dans lequel les gaz entrent à une température de l'ordre de 800°C et sortent à une température de l'ordre de 250°C et un filtre à manches 31. La référence 33 indique l'endroit de récupération des poussières issues du filtre et qui comporte une quantité importante de zinc. En aval des échangeurs de chaleur 29, la flèche F1 symbolise l'injection de produit à base de charbon actif dans les gaz pour l'abattement des dioxines, des furannes et des métaux lourds. Le cubilot est équipé de dispositifs d'injection d'air et d'oxygène au-dessus de la zone de fusion 17 qui contient le bain de métal fondu. Le dispositif d'injection comprend par exemple cinq tuyères d'injection 35 alimentées par un anneau d'alimentation non représenté. L'air injecté par les tuyères est réchauffé à une température de l'ordre de 550-600°C par le passage à travers l'un des échangeurs de chaleur 29, comme cela est symbolisé par la flèche F3. La chaleur ajoutée permet d'économiser du coke à ajouter. Concernant les échangeurs, ils permettent d'abaisser la température des gaz avant l'entrée dans le filtre à manches 31, qui ne supporte par des températures élevées dépassant par exemple 200°C.

Le dispositif de briquetage 1 selon l'invention comprend essentiellement deux trémies 37 et 39 pour la réception des copeaux de fonte ou d'acier 41 et les piles et/accumulateurs 43. Une troisième trémie peut être ajoutée pour les ajouts de Black Mass ou autre produit additionnel. Les piles et les copeaux sont acheminés par des vis sans fin 45 commandées par des moteurs avec variateur électrique de vitesse (non représentés). Ces vis sans fin 45 acheminent les composants des trémies dans la trémie d'alimentation 47 de la briqueteuse. Selon les vitesses appliquées aux vis sans fin 45, il est possible de doser les composants à introduire dans la trémie de briqueteuse 47. L'introduction simultanée des composants permet d'obtenir des mélanges homogènes dans la trémie 47. Le mélange est ensuite entraîné par une vis sans fin 49 vers une chambre de pré-compression 51. Un piston 53 pousse ensuite le mélange vers la chambre de compression 55 dans laquelle un piston 57 comprime alors le mélange sous forte pression. Après ouverture de la chambre, indiquée schématiquement par la flèche F4, le piston 57 expulse la briquette 11 qui sera alors transportée par le dispositif de transport 13 au gueulard du cubilot. Un collecteur 61 permet de recueillir les électrolytes obtenus lors de la fabrication des briquettes.

L'invention qui vient d'être décrite, à titre d'exemple non limitatif, présente des avantages à la fois économiques et environnementaux considérables. L'introduction dans le four des piles et/ou accumulateurs sous forme de briquettes composites permet d'y inclure aussi des déchets souvent pulvérulents et peu coûteux dont on veut valoriser certains éléments dans la fonte ou l'acier produit. L'élimination des électrolytes permet de limiter les quantités d'eau qui autrement devaient être évaporées et de limiter les éléments ioniques présents dans les électrolytes des piles et accumulateurs, ce qui permet de réduire les frais liés à la corrosion réfractaire du four et des échangeurs thermiques de l'installation.

Sur le plan environnemental, l'invention permet de valoriser des piles alcalines et salines ainsi que des accumulateurs avec un excellent rendement, mais aussi le manganèse et les métaux de la Black Mass des piles et accumulateurs. En les incorporant aux briquettes composites, de nombreux déchets souvent pulvérulents, contenant des éléments tels que le carbone, le manganèse, le zinc, le silicium et des éléments métalliques tels que du vanadium, molybdène, cuivre, nickel, cobalt et terres rares peuvent être valorisés.

Bien entendu, l'invention n'est pas limitée à l'utilisation des cubilots à vent chaud ou froid, mais permet aussi d'employer des hauts fourneaux de production de lingots de fonte, les fours électriques à arc ou d'autres, destinés à la production d'acier et de fonte au manganèse ou au nickel ou cobalt, sous réserve que les systèmes de traitement des fumées permettent de respecter la réglementation en matière de rejet à l'atmosphère.

La quantité de briquettes composites chargées sera basée sur les éléments recherchés pour leur valorisation, à savoir la teneur en manganèse, nickel, cobalt ou autre à obtenir dans la fonte issue du four ou l'acier ou le ferro-alliage. Si la teneur en manganèse, nickel ou cobalt ou plus généralement en autres métaux n'est pas critique dans le produit à réaliser, la quantité chargée pourrait être basée sur la teneur en zinc recherchée dans les poussières de filtration des gaz issus de l'installation de fusion.

Un autre avantage important de l'invention réside dans la possibilité de prévoir à la sortie du dispositif de briquetage un contrôle en temps réel par spectrométrie à fluorescence X sur chaque briquette ou pour chaque lot, pour détecter à la source tout risque de pollution avant le chargement des briquettes dans le four. Ainsi, par exemple les accumulateurs portables au cadmium et nickel qui pourraient être confondus lors du tri avec des piles alcalines et salines peuvent être détectés et leur introduction dans le four évitée.

## Revendications

1. Procédé de valorisation de piles usagées telles que des piles salines, alcalines, des piles boutons et des accumulateurs usagés, par introduction des piles et/ou accumulateurs comme charge dans un four de fusion de métal, au gueulard de celui-ci, **caractérisé en ce que** l'on soumet les piles et/ou accumulateurs à une opération de compression pour éliminer les électrolytes contenus dans les piles et/ou accumulateurs, préalablement à l'introduction des piles et/ou accumulateurs dans le four de fusion de métal.

2. Procédé selon la revendication 1, **caractérisé en ce que** l'on mélange les piles et/ou accumulateurs à des copeaux de fonte ou d'acier pour obtenir un mélange homogène, soumet ce mélange à l'opération de compression pour former des briquettes dont l'électrolyte a été chassé, et introduit les briquettes dans le four de fusion de métal.

3. Procédé selon la revendication 2, **caractérisé en ce que** l'on ajoute au mélange de piles et/ou accumulateurs et de copeaux de fonte et d'acier, des éléments additionnels tels qu'une poudre de Black Mass de piles ou d'accumulateurs, de carbone et des éléments d'alliage pour obtenir une fonte ou de l'acier d'une composition souhaitée, avant l'opération de briquetage.

4. Procédé selon l'une des revendications 2 ou 3, **caractérisé en ce que** le pourcentage de piles et/ou accumulateurs et d'éléments ajoutés, ne dépasse pas en totalité et en masse 40% du poids total d'une briquette.

5. Procédé selon l'une des revendications 1 à 4, **caractérisé en ce que** la pression à laquelle les piles et/ou accumulateurs sont soumis pour chasser leur électrolyte, est supérieur à 2500 kg/cm².

6. Procédé selon l'une des revendications 2 à 5, **caractérisé en ce que** l'on soumet les briquettes à un contrôle par spectrométrie à fluorescence X avant leur introduction dans le four de fusion de métal.

7. L'installation pour la mise en oeuvre du procédé selon l'une des revendications 1 à 6 **caractérisé en ce qu'**elle comprend un four de fusion de métal (3) et un dispositif de briquetage (1) pour former les briquettes (11) à introduire comme charge dans le four de fusion (3).

8. Installation selon la revendication 7, **caractérisée en ce que** le four de fusion de métal est un four tel qu'un cubilot, un haut-fourneau de production de lingots de fonte ou un four électrique à arc.

9. Installation selon l'une des revendications 7 ou 8, **caractérisée en ce que** le dispositif de briquetage (1) comprend des moyens de formation d'un mélange de piles et/ou accumulateurs, de copeaux de fonte et d'acier, le cas échéant, d'éléments additionnels, et de dosage de ces composants, avant la réalisation des briquettes (11) et des moyens de récupération de l'électrolyte chassé (61).
